# EUROPÄISCHE PATENTSCHRIFT

(11) **EP 1 606 585 B1**
(45) Veröffentlichungstag und Bekanntmachung des Hinweises auf die Patenterteilung: **16.09.2009**
(21) Anmeldenummer: 04712532.3
(22) Anmeldetag: 19.02.2004
(51) Int. Cl.: G01C 19/72, H01L 33/00, H01S 5/068

(54) **HOCHSTABILE BREITBAND-LICHTQUELLE UND DAFÜR GEEIGNETES STABI LISIERUNGSVERFAHREN**
HIGHLY STABLE BROADBAND LIGHT SOURCE AND SUITABLE STABILIZATION METHOD THEREFOR
SOURCE DE LUMIERE A BANDE LARGE ULTRA-STABLE ET PROCEDE DE STABILISATION CORRESPONDANT

(30) Priorität: 21.02.2003 DE 10307524
(43) Veröffentlichungstag der Anmeldung: 21.12.2005
(73) Patentinhaber: Northrop Grumman LITEF GmbH, 79115 Freiburg (DE)
(72) Erfinder: VOIGT, Sven, 79111 Freiburg (DE)
(74) Vertreter: Müller, Frithjof E.
(86) Internationale Anmeldenummer: PCT/EP2004/001639
(87) Internationale Veröffentlichungsnummer: WO 2004/074774

(56) Entgegenhaltungen:
- DE-A- 3 148 925
- DE-C- 19 802 095

## Beschreibung

Die Erfindung betrifft eine hochstabile Breitband-Lichtquelle auf der Basis einer Halbleiter-Lichtquelle und eines optischen Filters insbesondere für Navigationssysteme, sowie ein Verfahren zum Hochstabilisieren einer solchen.

Faseroptische Kreisel werden seit vielen Jahren in Navigationssystemen mittlerer Genauigkeit eingesetzt, wobei dem Einsatz in inertialen Navigationssystemen (INS) bisher die geringe Skalenfaktorgenauigkeit von > 100 Einheiten pro Million (ppm) entgegenstand, die hauptsächlich aus der Wellenlängenstabilität der Lichtquelle resultiert.

Bekannt sind hochstabile Superfluoreszenzlichtquellen, deren Restwellenlängen-Ungenauigkeiten 0,05 Einheiten pro Million (ppm) pro Grad Celsius (0,05 ppm/°C) betragen. Jedoch sind diese Lichtquellen sehr teuer und finden Anwendung nur in wenigen hoch genauen INS-Systemen.

Superlumineszenzdioden (SLDs) sind als Halbleiter-Lichtquellen eine preiswerte Alternative, haben aber zwei wesentliche Nachteile.

Zum einen beträgt die Wellenlängenabhängigkeit von der Temperatur etwa |dλ/dT| = 400 ppm/°C, und zum anderen altern solche Halbleiter-Lichtquellen, woraus unerwünschte Wellenlängendriften und damit insgesamt eine schlechte Genauigkeit und Stabilität resultieren.

Die Verwendung von Bragg-Gittern zur Verbesserung der Wellentängenstabilität von Erbium-dotierten Superlumineszenz-Faserquellen ist beispielsweise in N. Cerre et al., "Fiber Bragg grating for use within high-accuracy Fiber Optic Gyroscope", Proc. OFS 1997, beschrieben. In diesem speziellen Zusammenhang werden zwar die gute Stabilität und die geringe Temperaturabhängigkeit des Gitters an sich genutzt, jedoch sind die dadurch erzielbaren Wirkungen zur Verwendung in Verbindung mit einer Halbleiter-Lichtquelle, wie einer SLD, allein nicht ausreichend.

Darüber hinaus offenbart die Druckschrift DE 198 02 095 C1 ein Verfahren und eine Einrichtung zur Stabilisierung des Skalenfaktors eines optischen Kreisels, bei welchen eine von einer Lichtquelle aus in ein Faserende eingestrahlte Emissionsbandbreite im Wellenlängenbereich der Intensitätskennlinie des Lichts durch ein schmalbandiges optisches Transmissionsfilter auf eine wesentlich schmälere Transmissionsbandbreite begrenzt wird. Die Transmissionsbandbreite des optischen Filters wird hierbei in Abhängigkeit von der an diesem Filter gemessenen Temperatur mittels einer vorkalibrierten Nachschlagetabelle aktiv verändert. In diesem Zusammenhang sei weiterhin auf die Druckschrift DE-A-31 48 925 verwiesen.

In Kenntnis des Vorstehenden liegt der Erfindung die Aufgabe zugrunde, eine Ereitband-Lichtquelle mit hoher Wellenlängenstabilität ihres Gesamtspektrums und ein Verfahren zum Stabilisieren einer solchen Breitband-Lichtquelle zu schaffen, wobei die Wellenlängenstabilität zum Teil oder ganz durch auf eine Anzahl optischer Filter angewandte Filterfunktionen bestimmt ist.

Diese Aufgabe wird erfindungsgemäß durch eine hochstabile Breitband-Lichtquelle mit den Merkmalen des Patentanspruchs 1 und ein Verfahren zum Stabilisieren einer Breitband-Lichtquelle mit den Merkmalen des Patentanspruchs 11 gelöst.

Vorteilhafte Weiterbildungen der Erfindung sind Gegenstand der beigefügten abhängigen Ansprüche.

Die Erfindung und vorteilhafte Ausführungsvarianten werden nachstehend anhand von Ausführungsbeispielen unter Bezugnahme auf die beigefügten Zeichnungen näher beschrieben. Es zeigen:
- **Fig. 1**: eine Anordnung einer Breitband-Lichtquelle gemäß einem Beispiel mit zwei Faser-Bragg-Gittern und einem Koppelele- ment in Form eines 2x2-Kopplers;
- **Fig. 2**: eine Anordnung einer Breitband-Lichtquelle gemäß dem Bei- spiel mit einem Faser-Bragg-Gitter und einem Koppelelement in Form eines optischen Zirkulators;
- **Fig. 3**: eine Darstellung des Emissionsspektrums einer als Halblei- ter-Lichtquelle verwendeten Superlumineszenzdiode in Über- lagerung mit einer Bandpass-Filter-Funktion eines in Reflexi- on betriebenen Faser-Bragg-Gitters;
- **Fig. 4**: das am Ausgang der Breitband-Lichtquelle auftretende, re- sultierende Gesamtspektrum der Überlagerung der Spektren gemäß Fig. 3:
- **Fig. 5**: die Darstellung eines Spektrums eines Gauß-Filters zur Sta- bilisierung der Wellenlänge der Breitband-Lichtquelle und des Wellenlängenspektrums einer Superlumineszenzdiode;
- **Fig. 6**: eine Anordnung einer Breitband-Lichtquelle gemäß einem Ausführungsbeispiel; und
- **Fig. 7**: eine Darstellung des Wellenlängenspektrums eines Breit- bandfilters mit zwei Faser-Bragg-Gittern in Überlagerung mit dem Emissionsspektrum der Superlumineszenzdiode gemäß dem Ausführungsbeispiel.

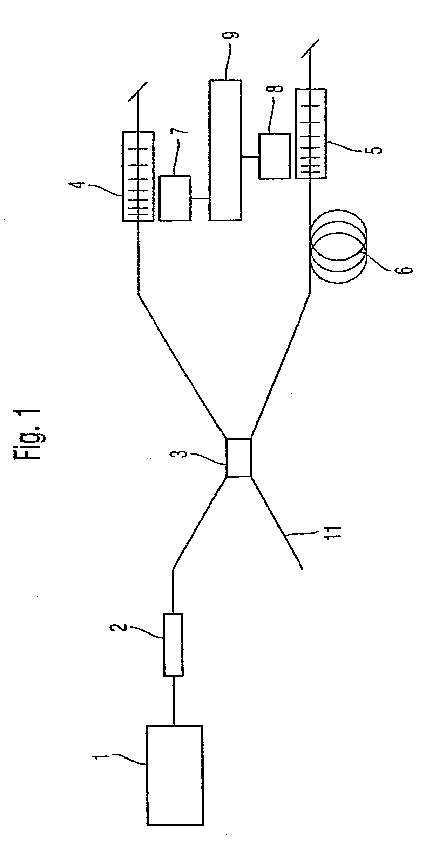

Fig. 1 zeigt eine Anordnung einer Breitband-Lichtquelle gemäß einem grundlegenden Beispiel mit zwei Faser-Bragg-Gittern und einem Koppelelement.

In diesem Beispiel wird als Halbleiter-Lichtquelle eine Superlumineszenzdiode 1 eingesetzt, deren Lichtemission über einen optischen Isolator 2 an einen Eingang eines Koppelelements 3 ausgegeben wird. Zwei weitere Eingänge des Koppelelements 3 sind mit jeweils einem Faser-Bragg-Gitter 4 bzw. 5 mit großer Bandbreite verbunden, die in Reflexion betrieben werden.

Aus diesem Grund wird als Koppelement 3 beispielsweise ein 2x2-Koppler oder dergleichen benötigt. Prinzipiell kann das in Fig. 1 gezeigte Beispiel mit nur einem Faser-Bragg-Gitter realisiert werden, wobei bei Verwendung eines 2x2-Kopplers etwa 6 dB Zusatzverlust erzeugt werden.

Um diese Verluste zu vermeiden, können zwei identische Faser-Bragg-Gitter, ein erstes Faser-Bragg-Gitter 4 und ein zweites Faser-Bragg-Gitter 5, zur Anwendung kommen, die zur Verhinderung einer möglichen Interferenz über eine optische Verzögerungsleitung 6 entkoppelt sind. Durch die Verzögerungsleitung 6 wirkt der von dem zweiten Faser-Bragg-Gitter 5 gelieferte Lichtreflex für die gesamte Lichtquelle als eine zweite Kohärenzspitze gleicher Intensität wie der Lichtreflex des ersten Faser-Bragg-Gitters 4. Die Länge der optischen Verzögerungsleitung 6 ist daher bevorzugt so zu wählen, dass diese zweite Kohärenzspitze nicht mit anderen Lichtwegen in einem Faserkreisel korreliert. Die Verwendung des optischen Isolators 2 ist in einer solchen Ausführungsform optional, jedoch sinnvoll.

Ferner sind bei dem Aufbau nach Fig. 1 jedem Faser-Bragg-Gitter 4 bzw. 5 jeweils ein Temperatursensor 7 bzw. 8 zugeordnet, deren Ausgangssignale an eine Steuereinrichtung 9 ausgegeben werden. Die Funktion der Steuereinrichtung 9 in Verbindung mit dem Temperatursensoren 7 und 8 wird an späterer Stelle im Zusammenhang beschrieben.

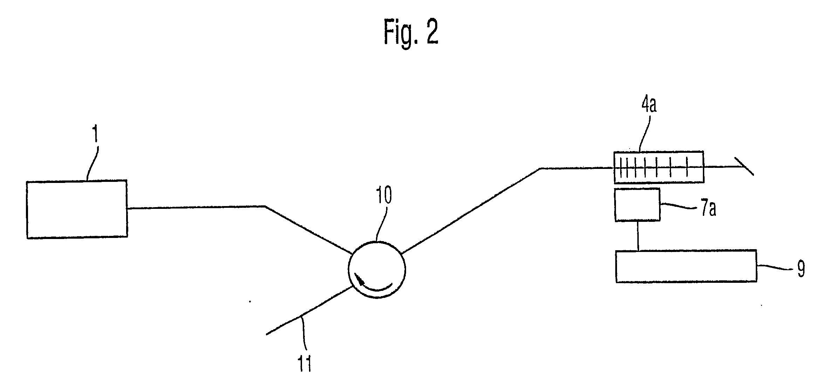

Fig. 2 zeigt eine alternative Anordnung einer Breitband-Lichtquelle gemäß dem Beispiel mit nur einem Faser-Bragg-Gitter 4a und einem optischen Zirkulator 10 anstelle eines Kopplers 3. In diesem Fall entfallen die durch den Koppler 3 erzeugten Zusatzverluste, so dass eine entsprechende Kompensation durch ein zweites Faser-Bragg-Gitter 5 wie in der in Fig. 1 gezeigten Anordnung nicht erforderlich ist. Die Verwendung eines optischen Isolators 2 ist auch in diesem Fall optional und in Fig. 2 nicht dargestellt.

In beiden in Fig. 1 und 2 gezeigten Beispielen besitzt das Koppelelement 3, d. h. insbesondere der optische Zirkulator 10, einen Ausgang 11, über den die Lichtemission, d. h. das resultierende Gesamtspektrum der Lichtemission der Breitband-Lichtquelle, ausgegeben wird.

Ein optischer Zirkulator ist im vorliegenden Zusammenhang die eleganteste Lösung für ein Koppelelement. Das gesamte reflektierte Spektrum des Filters wird auf den "freien" Ausgang gegeben. Kein Licht wird in Richtung der Quelle geschickt. Damit wird kein optischer Isolator zum Schutz der Lichtquelle benötigt. Allerdings sind zur Zeit optische Zirkulatoren noch sehr teuer und finden deshalb allenfalls bei Laboraufbauten Einsatz in Faserkreiseln.

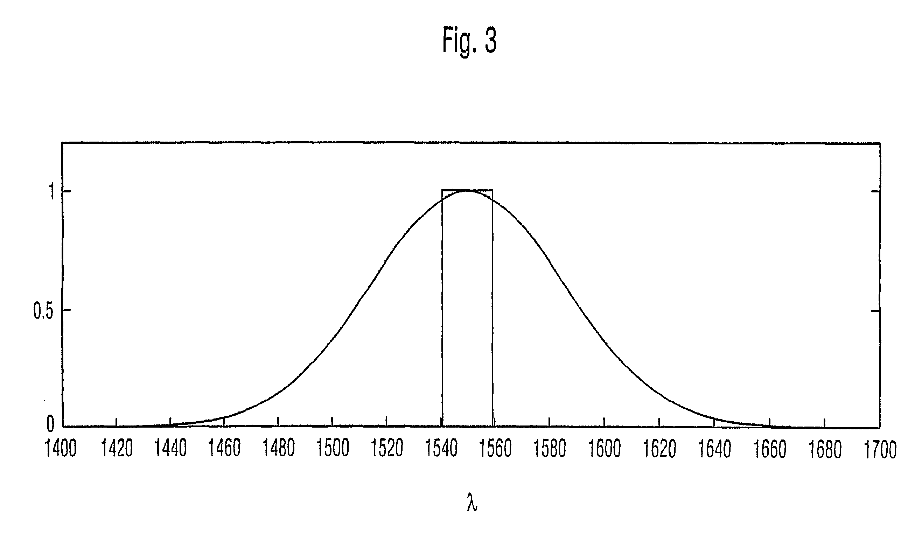

Dieses resultierende Gesamtspektrum setzt sich wie in Fig. 3 gezeigt aus dem gaußförmigen Emissionsspektrum der Halbleiter-Lichtquelle 1 und der Bandpass-Filterfunktion des bzw. der Faser-Bragg-Gitter 4 und 5 bzw. 4a zusammen. Beispielsweise beträgt die Halbwertsbreite der in Fig. 3 gezeigten Gaußverteilung 50 nm in Überlagerung mit einer Filterfunktion bzw. Spaltfunktion einer Breite von 20 nm, welche dadurch genau in den flachen (Scheitel-) Bereich des Gaußspektrums fällt.

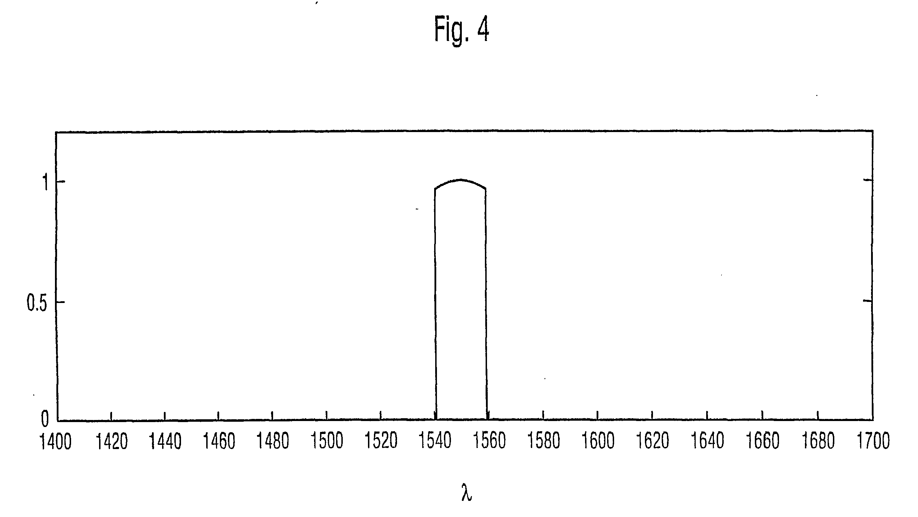

Das daraus resultierende Gesamtspektrum ist in Fig. 4 dargestellt, wobei das Integral unter dem resultierenden Gesamtspektrum der Breitband-Lichtquelle etwa 22% des Integrals unter der Gaußfunktion des Spektrums der Halbleiter-Lichtquelle 1 beträgt. Bei den heute verfügbaren Halbleiter-Lichtquellen, wie beispielsweise der bevorzugt verwendeten Superlumineszenzdiode, ist die resultierende Lichtintensität damit für die Anwendung in einem Faserkreisel noch immer ausreichend, wobei keine Beschränkung auf die beispielhaft dargestellte Rechteckfilterfunktion besteht, sondern auch andere Filterfunktionen wie z.B. Sinc-Filter einsetzbar sind.

Im Einzelnen hängt hierbei der jeweils eingesetzte Filtertyp von der verwendeten Halbleiter-Lichtquelle 1 ab, wobei zwei Faktoren für die Filterauswahl ausschlaggebend sind: zum einen die maximal erzielbare Intensität in Reflexion, d.h. die Filterbreite und der Reflexionskoeffizient, und zum anderen eine möglichst geringe Änderung der resultierenden Filterwellenlänge bei einer auftretenden Änderung der Wellenlänge der Halbleiter-Lichtquelle 1.

Während durch die erstgenannte Bedingung entstehende Nachteile einer geringeren Intensität durch eine Erhöhung der Lichtleistung verhältnismäßig einfach zumindest teilweise ausgeglichen werden können, ist die letztgenannte Bedingung schwerer zu erfüllen.

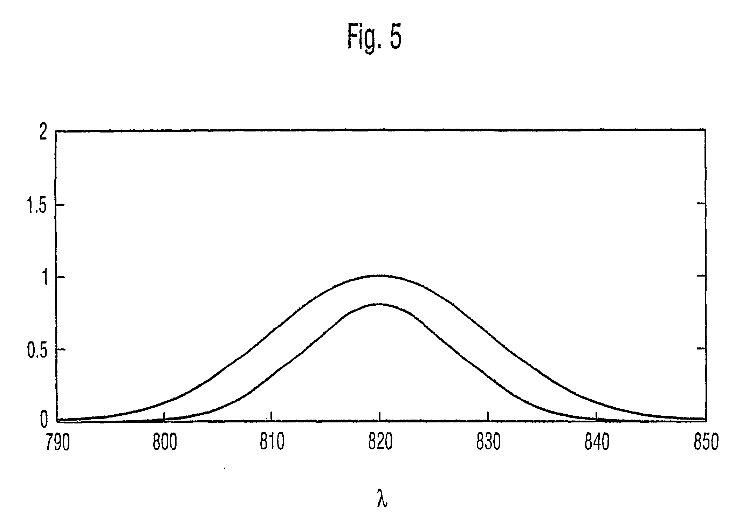

Unter Berücksichtigung dessen ist ein Gaußfilter mit einem Spektrum, das unterhalb des Ausgangsspektrums der Halbleiter-Lichtquelle 1 liegt, wie in Fig. 5 dargestellt, optimal.

Ferner muss eine größtmögliche Stabilität der Wellenlänge der bzw. des Faser-Bragg-Gitters 4 und 5 bzw. 4a bereitgestellt werden. Die thermische bzw. Temperaturempfindlichkeit der Bragg-Wellenlänge solcher Gitter wird durch den thermooptischen Effekt von Quarz und die thermische Längenausdehnung dieses Materials bestimmt. Die thermische Empfindlichkeit beträgt in Abhängigkeit von der Wellenlänge etwa 10 Einheiten pro Million pro Kelvin (10 ppm/K) bei Raumtemperatur und ändert sich geringfügig hin zu höheren oder tieferen Temperaturen.

Um diesen Wert zu verbessern, können Faser-Bragg-Gitter zunächst passiv, d.h. athermal, stabilisiert werden, und erreichen dann eine Restempfindlichkeit von bis zu 0,5 ppm/K. Durch eine Modellierung der Temperaturkennlinie eines solchen passiv stabilisierten Gitters ergeben sich für die Bragg-Wellenlänge Restunsicherheiten von etwa einer Einheit pro Million (1 ppm) über den gesamten Temperaturbereich.

In Simulationen konnte gezeigt werden, dass in Abhängigkeit von dem verwendeten Filtertyp eine Verbesserung der Temperaturabhängigkeit der Wellenlänge von etwa 400 ppm/K der Halbleiter-Lichtquelle 1 auf etwa 100 ppm/K erreichbar ist. Als besonders vorteilhaft erwies sich hierbei die Verwendung eines Gaußfilters, dessen Spektrum unter dem Spektrum der Gaußverteilung der Halbleiter-Lichtquelle 1 liegt, wie vorstehend bereits erwähnt wurde. Ein solches Filter ist in der Regel realisierbar, da optische Gaußfilter schmalbandiger als das Spektrum einer SLD und mit einem geringen Reflexionskoeffizienten um maximal 0,8 herstellbar sind.

Ändert sich in diesem Fall das Spektrum der Halbleiter-Lichtquelle 1 nicht zu stark, d. h. um bei einer gekühlten Lichtquelle gut erreichbare maximal 2000 ppm, entsteht keine Überlappung der Spektren der Halbleiter-Lichtquelle 1 und derjenigen des Faser-Bragg-Gitter(s) 4 und 5 bzw. 4a. Somit wird die Wellenlängenstabilität der Halbleiter-Lichtquelle 1 bzw. der Lichtemission der Gesamtanordnung nur durch das Filter auf der Basis eines Faser-Bragg-Gitters bestimmt.

Wird die Temperaturkennlinie eines solchen Faser-Bragg-Gitters darüber hinaus unter Verwendung eines bzw. mehrerer Temperatursensoren 7, 8 bzw. 7a und einer Steuereinrichtung 9 gemäß Fig. 1 und 2 kalibriert und thermisch aktiv stabilisiert, sind Restwellenlängen-Unsicherheiten < 1 ppm über den gesamten Temperaturbereich erzielbar.

Ein weiterer zu berücksichtigender Gesichtspunkt ist die Alterung der Halbleiter-Lichtquelle 1, durch welche sich das Wellenlängenspektrum der Halbleiter-Lichtquelle 1 über deren Lebensdauer hinweg während der Lichtemission ändern kann. Durch die Verwendung von Faser-Bragg-Gittern bzw. -Filtern gemäß der Erfindung und den beschriebenen Ausführungsbeispielen wird eine solche Alterung jedoch wesentlich verlangsamt, da das resultierende Gesamtausgangsspektrum hauptsächlich durch die vorstehend beschriebene Filterfunktion bestimmt ist und sich die resultierende Schwerpunktswellenlänge während der Alterung der Halbleiter-Lichtquelle 1 sehr viel weniger ändert als die Schwerpunktswellenlänge der alternden Halbleiter-Lichtquelle 1 selbst. Bei Verwendung des vorstehend beschriebenen Gaußfilters hat beispielsweise die normale Alterung, d. h. ein auftretender Wellenlängendrift von 3 nm, entsprechend etwa 3700 ppm, keinerlei Einfluss auf das resultierende Gesamtspektrum.

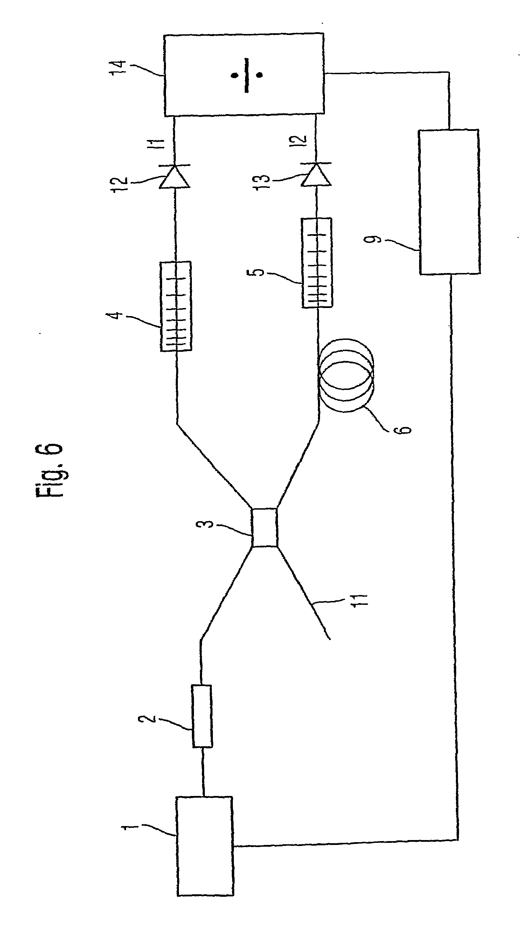

Die Lösung gemäß dem Ausführungsbeispiel der Erfindung wie in Fig. 6 gezeigt ist dann anwendbar, wenn kein Gaußfilter zum Einsatz kommen kann. Die grundlegende, beispielhaft dargestellte Anordnung entspricht der der Fig. 1, so dass gleiche oder vergleichbare Komponenten mit den gleichen Bezugszeichen bezeichnet sind.

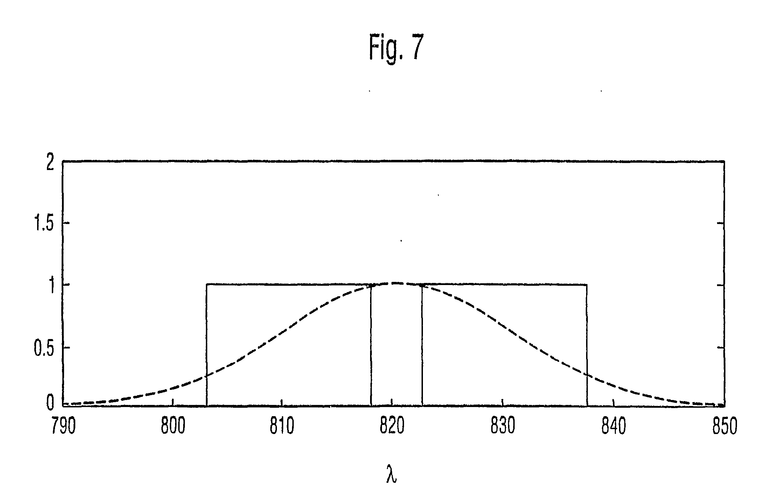

Gegenüber der in Fig. 1 gezeigten Anordnung werden in dem Ausführungsbeispiel zwei Faser-Bragg-Gitter 4, 5 verwendet, deren Spektren sich wie in Fig. 7 gezeigt überlappen. Die resultierende Filterbandbreite ist somit größer als die Bandbreite der einzelnen Faser-Bragg-Gitter 4, 5. Das jeweils von den Faser-Bragg-Gittern 4. 5 übertragene Spektrum wird von zwei den Faser-Bragg-Gittern 4, 5 jeweils zugeordneten Fotodetektoren 12 und 13 erfasst und einem Teiler 14, beispielsweise einem digitalen Signalprozessor oder Logarithmierern, zugeführt und in diesem durch Quotientenbildung verglichen.

Aus einer solchen Anordnung resultiert eine lineare Kennlinie in einem Bereich bis 1000 ppm zwischen dem Quotienten I1/I2 der von den Fotodetektoren 12 (I1) bzw. 13 (I2) ausgegebenen Intensitäten 11 bzw. I2 und der Wellenlängenänderung , wie vereinfacht in Fig. 7 dargestellt ist.

Alternativ können der Quotient I1/I2 dieser Intensitäten auf 1 festgelegt und die Wellenlänge der Halbleiter-Lichtquelle 1 über eine Steuereinrichtung 9, beispielsweise eine Regelelektronik, durch Änderung der Peltiertemperatur rückgekoppelt so verschoben werden, dass die durch die Fotodetektoren 12, 13 erfassten Intensitäten I1 bzw. I2 gleich bleiben.

In Simulationen konnte gezeigt werden, dass eine größte Empfindlichkeit erreicht wird, wenn die Gesamtfilterbreite maximiert wird, beispielsweise auf 35 nm, wie in Fig. 7 dargestellt. Das Ausmaß der spektralen Überlappung spielt hierbei eine untergeordnete Rolle, jedoch kann die elektronische Auflösung nicht beliebig verkleinert werden, so dass Driften von weniger als 50 ppm schwer bestimmbar bzw. kompensierbar sind. Vorteilhaft bei diesem Ausführungsbeispiel bleibt jedoch die Möglichkeit der Kompensation der Alterung der Halbleiter-Lichtquelle 1.

Die hochstabile Breitbandlichtquelle gemäß der Erfindung eignet sich nicht nur für die Anwendung in Faserkreiseln, sondern auch in Weißlichtinterferometern, bei der optischen Kohärenz-Tomographie, in Faser-Bragg-Sensoren (Temperatur, Strain, Druck, Vibration, etc.), Strom- und Spannungssensoren, in der Metrologie von faseroptischen Komponenten und dgl.

## Patentansprüche

1. Hochstabile Breitband-Lichtquelle, umfassend:
- eine Halbleiter-Lichtquelle (1) mit einem bestimmten Emissionsspektrum;
- eine Anzahl optischer Filter (4, 5) mit bestimmten Bandpass-Filterfunktionen und vorgegebenen Bandbreiten:
- ein Koppelelement (3), das durch die Lichtemissionen der Halbleiter-Lichtquelle (1) und der Anzahl optischer Filter (4, 5) beaufschlagt ist und an dessen Ausgang (11) die Lichtemission der Breitband-Lichtquelle erfolgt, wobei
sich das Spektrum der Lichtemission der Breitband-Lichtquelle aus dem Emissionsspektrum der Halbleiter-Lichtquelle (1) und den Bandpass-Filterfunktionen der Anzahl optischer Filter (4. 5) zusammensetzt; und
die Wellenlängen der Anzahl optischer Filter (4, 5) so stabilisiert sind, dass das Spektrum der Lichtemission der Breitband-Lichtquelle im Wesentlichen nur durch die Filterfunktionen der Anzahl optischer Filter (4, 5) bestimmt ist,
**dadurch gekennzeichnet, dass**
- die Anzahl der optischen Filter zwei ist, und
- zwei Fotodetektoren (12, 13) vorgesehen sind, von denen jeweils einer jeweils einem optischen Filter (4, 5) zugeordnet ist und so angeordnet ist, dass er das von dem zugeordneten optischen Filter (4, 5) übertragene Spektrum erfasst und einem Teiler (14) zuführt, in welchem die erfassten Spektren verglichen werden.

2. Hochstabile Breitband-Lichtquelle nach Anspruch 1, **dadurch gekennzeichnet, dass** sich die Bandbreiten der optischen Filter (4, 5) überlappen.

3. Hochstabile Breitband-Lichtquelle nach Anspruch 1, **dadurch gekennzeichnet, dass** der Teiler (14) ein digitaler Signalprozessor oder Logarithmierer ist, in dem eine Quotientenbildung für die beiden zugeführten Spektren erfolgt.

4. Hochstabile Breitband-Lichtquelle nach Anspruch 1, **gekennzeichnet durch** eine Steuereinrichtung (9), die ein Ausgangssignal des Teilers (14) empfängt und rückgekoppelt die Wellenlänge der Halbleiter-Lichtquelle (1) so steuert, dass die von den beiden Fotodetektoren (12, 13) erfassten Intensitäten (I1, I2) gleich bleiben.

5. Hochstabile Breitband-Lichtquelle nach einem der vorangehenden Ansprüche, **dadurch gekennzeichnet, dass** die Halbleiter-Lichtquelle eine Superlumineszenzdiode (1) ist.

6. Hochstabile Breitband-Lichtquelle nach einem der vorangehenden Ansprüche, **dadurch gekennzeichnet, dass** die optischen Filter in Reflexion betriebene Faser-Bragg-Gitter (4. 5) sind.

7. Hochstabile Breitband-Lichtquelle nach einem der vorangehenden Ansprüche, **dadurch gekennzeichnet, dass** das Koppelelement ein 2x2-Koppler (3) ist.

8. Hochstabile Breitband-Lichtquelle nach einem der vorangehenden Ansprüche, **dadurch gekennzeichnet, dass** zwischen der Halbleiter-Lichtquelle (1) und dem Koppelelement (3) ein optischer Isolator (2) angeordnet ist.

9. Hochstabile Breitband-Lichtquelle nach einem der vorangehenden Ansprüche, **dadurch gekennzeichnet, dass** die optischen Filter (4, 5) zwei identische, in Reflexion betriebene Faser-Bragg-Gitter (4, 5) sind, von denen eines seine Lichtemission dem Koppelelement (3) direkt und das andere seine Lichtemission dem Koppelelement (3) über eine optische Verzögerungsleitung (6) zuführt.

10. Hochstabile Breitband-Lichtquelle nach Anspruch 9, **dadurch gekennzeichnet, dass** die Länge der optischen Verzögerungsleitung (6) so gewählt ist, dass eine durch diese erzeugte zweite Kohärenzspitze nicht mit anderen Lichtwegen im Koppelelement (3) korreliert.

11. Verfahren zum Hochstabilisieren einer Breitband-Lichtquelle, umfassend die Schritte:
- Emittieren von Licht mittels einer Halbleiter-Lichtquelle (1) mit einem bestimmten Emissionsspektrum:
- Emittieren von Licht mittels einer Anzahl optischer Filter (4, 5) mit bestimmten Bandpass-Filterfunktionen und bestimmten Bandbreiten;
- Koppeln des emittierten Lichts in einem Koppelelement (3), dem die Lichtemissionen der Halbleiter-Lichtquelle (1) und der Anzahl der optischen Filter (4, 5) zugeführt werden und an dessen Ausgang (11) die Lichtemission der Breitband-Lichtquelle erfolgt, wobei
sich das Spektrum der Lichtemission der Breitband-Lichtquelle aus dem Emissionsspektrum der Halbleiter-Lichtquelle (1) und den Bandpass-Fliterfunktionen der Anzahl optischer Filter (4. 5) zusammensetzt; und
Stabilisieren der Wellenlängen der Anzahl optischer Filter (4. 5) so, dass das Spektrum der Lichtemission der Breitband-Lichtquelle im Wesentlichen nur durch die Filterfunktionen der Anzahl optischer Filter (4, 5) bestimmt wird,
**gekennzeichnet durch die Schritte:**
- Wählen der Anzahl der optischen Filter zu zwei;
- Bereitstellen zweier Fotodetektoren (12. 13);
- Zuordnen jeweils eines der optischen Filter (4, 5) zu jeweils einem der Fotodetektoren (12, 13) und Erfassen des von dem zugeordneten optischen Filter (4, 5) übertragenenen Spektrums;
- Zuführen des Spektrums zu einem Teiler (14); und
- Vergleichen der erfassten Spektren in dem Teiler (14).

## Claims

1. A highly stable broadband light source, comprising:
- a semiconductor light source (1) with a specific emission spectrum;
- a number of optical filters (4, 5) having specific band pass filtering functions and predetermined bandwidths;
- a coupling element (3), to which the light emissions of the semiconductor light source (1) and of the number of optical filters (4, 5) are fed and at the output (11) of which the light emission of the broadband light source is effected,
wherein the spectrum of the light emission of the broadband light source is composed of the emission spectrum of the semiconductor light source (1) and the band pass filtering functions of the number of optical filters (4, 5); and
wherein the wavelengths of the number of optical filters (4, 5) are stabilized in such a way that the spectrum of the light emission of the broadband light source is essentially only determined only by the filtering functions of the number of optical filters (4, 5),
**characterized in**
- **that** the number of optical filters is two, and
- **that** two photo detectors (12, 13) are provided, a respective one of which is assigned to a respective optical filter (4, 5) and is arranged such that it detects the spectrum transmitted by the assigned optical filter (4, 5) and feeds it to a divider (14), in which the detected spectra are compared.

2. The highly stable broadband light source according to claim 1,
**characterized in**
**that** the bandwidths of the optical filters (4, 5) overlap.

3. The highly stable broadband light source according to claim 1,
**characterized in**
**that** the divider (14) is a digital signal processor or logarithmizer in which a quotient formation is effected for the two spectra fed.

4. The highly stable broadband light source according to claim 1,
**characterized by**
a control device (9), which receives an output signal of the divider (14) and controls the wavelength of the semiconductor light source (1) with feedback in such a way, that the intensities (I1, I2) detected by the two photo detectors (12, 13) remain the same.

5. The highly stable broadband light source according to any one of the preceding claims,
**characterized in**
**that** the semiconductor light source is a super luminescence diode (1).

6. The highly stable broadband light source according to any one of the preceding claims,
**characterized in**
**that** the optical filters are fibre Bragg gratings (4, 5) operated in reflection.

7. The highly stable broadband light source according to any one of the preceding claims,
**characterized in**
**that** the coupling element is a 2 x 2 coupler (3).

8. The highly stable broadband light source according to any one of the preceding claims,
**characterized in**
**that** an optical isolator (2) is arranged between the semiconductor light source (1) and the coupling element (3).

9. The highly stable broadband light source according to any one of the preceding claims,
**characterized in**
**that** the optical filters (4, 5) are two identical fibre Bragg gratings (4, 5) operated in reflection, of which one feeds its light emission to the coupling element (3) directly and the other feeds its light emission to the coupling element (3) via an optical delay line (6).

10. The highly stable broadband light source according to claim 9,
**characterized in**
**that** the length of the optical delay line (6) is chosen such that a second coherence spike generated by the latter does not correlate with other light paths in the coupling element (3).

11. A method for highly stabilizing a broadband light source,
comprising the steps:
- emitting of light by means of a semiconductor light source (1) with a specific emission spectrum;
- emitting of light by means of a number of optical filters (4, 5) with specific band pass filtering functions and specific bandwidths;
- coupling of the emitted light in a coupling element (3), to which the light emissions of the semiconductor light source (1) and of the number of optical filters (4, 5) are fed and at the output (11) of which the light emission of the broadband light source is effected,
wherein the spectrum of the light emission of the broadband light source is composed of the emission spectrum of the semiconductor light source (1) and the band pass filtering functions of the number of optical filters (4, 5); and
- stabilizing of the wavelengths of the number of optical filters (4, 5) in such a way that the spectrum of the light emission of the broadband light source is essentially only determined by the filtering functions of the number of optical filters (4, 5),
**characterized by** the steps of:
- choosing the number of optical filters to be two;
- providing two photo detectors (12, 13);
- assigning a respective one of the optical filters (4, 5) to a respective one of the photo detectors (12, 13) and detecting the spectrum transmitted by the assigned optical filter (4, 5);
- feeding the spectrum to a divider (14); and
- comparing the detected spectra in the divider (14).

## Revendications

1. Source de lumière à large bande ultrastable comprenant :
- une source de lumière à semi-conducteur (1) avec un spectre d'émission défini ;
- un certain nombre de filtres optiques (4, 5) avec des fonctions de filtrage passe-bande définies et des largeurs de bande prédéfinies ;
- un élément de couplage (3) qui est sollicité par les émissions de lumière de la source lumineuse (1) et des filtres optiques (4, 5) et à la sortie (11) duquel a lieu l'émission de lumière de la source lumineuse à large bande,
le spectre de l'émission de lumière de la source lumineuse à large bande se composant du spectre d'émission de la source lumineuse (1), et des fonctions de filtrage passe-bande des filtres optiques (4, 5) ; et
les longueurs d'onde des filtres optiques (4, 5) étant stabilisées de telle sorte que le spectre de l'émission de lumière de la source lumineuse à large bande ne soit défini pratiquement que par les fonctions de filtrage des filtres optiques (4, 5),
**caractérisée**
- **en ce que** le nombre de filtres optiques est de deux et
- **en ce qu'**il est prévu deux photodétecteurs (12, 13) qui sont associés chacun à un filtre optique (4, 5) et qui sont disposés de manière à détecter le spectre transmis par le filtre optique (4, 5) associé et à amener ce spectre dans un diviseur (14) dans lequel les spectres détectés sont comparés.

2. Source de lumière à large bande ultrastable selon la revendication 1, **caractérisée en ce que** les largeurs de bande des filtres optiques (4, 5) se recouvrent.

3. Source de lumière à large bande ultrastable selon la revendication 1, **caractérisée en ce que** le diviseur (14) est constitué par un organe de traitement de signaux numériques ou par un logarithmeur dans lequel une formation de quotient est réalisée pour les deux spectres transmis.

4. Source de lumière à large bande ultrastable selon la revendication 1, **caractérisée par** un dispositif de commande (9) qui reçoit un signal de sortie du diviseur (14) et qui commande, par rétroaction, la longueur d'onde de la source lumineuse à semi-conducteur (1) de telle sorte que les intensités (11, 12) détectées par les deux photodétecteurs (12, 13) restent égales.

5. Source de lumière à large bande ultrastable selon l'une des revendications précédentes, **caractérisée en ce que** la source lumineuse à semi-conducteur est constituée par une diode superluminescente (1).

6. Source de lumière à large bande ultrastable selon l'une des revendications précédentes, **caractérisée en ce que** les filtres optiques sont constitués par des réseaux de Bragg fibrés (4, 5) fonctionnant en réflexion.

7. Source de lumière à large bande ultrastable selon l'une des revendications précédentes, **caractérisée en ce que** l'élément de couplage est constitué par un coupleur 2x2 (3).

8. Source de lumière à large bande ultrastable selon l'une des revendications précédentes, **caractérisée en ce qu'**un isolateur optique (2) est disposé entre la source lumineuse à semi-conducteur (1) et l'élément de couplage (3).

9. Source de lumière à large bande ultrastable selon l'une des revendications précédentes, **caractérisée en ce que** les filtres optiques (4, 5) sont constitués par deux réseaux de Bragg fibrés (4, 5) identiques fonctionnant en réflexion, l'un amenant son émission de lumière dans l'élément de couplage (3) directement tandis que l'autre amène son émission de lumière dans l'élément de couplage (3) par l'intermédiaire d'une ligne de retard optique (6).

10. Source de lumière à large bande ultrastable selon la revendication 9, **caractérisée en ce que** la longueur de la ligne de retard optique (6) est choisie pour qu'une deuxième pointe de cohérence produite par celle-ci ne soit pas en corrélation avec d'autres trajets de faisceau lumineux dans l'élément de couplage (3).

11. Procédé pour rendre ultrastable une source lumineuse à large bande, comprenant les étapes suivantes :
- émission de lumière à l'aide d'une source lumineuse à semi-conducteur (1) avec un spectre d'émission défini ;
- émission de lumière à l'aide d'un certain nombre de filtres optiques (4, 5) avec des fonctions de filtrage passe-bande définies et des largeurs de bande définies ;
- couplage de la lumière émise, dans un élément de couplage (3) dans lequel sont amenés les émissions de lumière de ladite source de lumière (1) et les filtres optiques (4, 5) et à la sortie (11) duquel a lieu l'émission de lumière de la source lumineuse à large bande,
le spectre de l'émission de lumière de la source lumineuse à large bande se composant du spectre d'émission de la source lumineuse (1), et des fonctions de filtrage passe-bande des filtres optiques (4, 5) ; et
stabilisation des longueurs d'onde des filtres optiques (4, 5) de telle sorte que le spectre de l'émission de lumière de la source lumineuse à large bande ne soit défini pratiquement que par les fonctions de filtrage des filtres optiques (4, 5),
**caractérisé par** les étapes suivantes :
- choix de deux filtres optiques ;
- préparation de deux photodétecteurs (12, 13) ;
- association de chaque filtre optique (4, 5) à un photodétecteur respectif (12, 13) et détection du spectre transmis par le filtre optique (4, 5) associé ;
- amenée du spectre dans un diviseur (14) ; et
- comparaison des spectres détectés dans le diviseur (14).
